# EUROPÄISCHE PATENTSCHRIFT

(11) **EP 0 925 212 B1**
(45) Veröffentlichungstag und Bekanntmachung des Hinweises auf die Patenterteilung: **24.04.2002**
(21) Anmeldenummer: 97909260.8
(22) Anmeldetag: 13.09.1997
(51) Int. Cl.: B60T 8/48, B60T 8/24

(54) **HYDRAULISCHE KRAFTFAHRZEUGBREMSANLAGE MIT RADSCHLUPFREGELUNG**
HYDRAULIC MOTOR VEHICLE BRAKE SYSTEM WITH ANTISKID CONTROLLER
INSTALLATION DE FREINAGE HYDRAULIQUE A REGULATION ANTIPATINAGE POUR AUTOMOBILES

(30) Priorität: 23.09.1996 DE 19638898
(43) Veröffentlichungstag der Anmeldung: 30.06.1999
(73) Patentinhaber: Continental Teves AG & Co. oHG, 60488 Frankfurt (DE)
(72) Erfinder: BECK, Erhard, D-35781 Weilburg (DE)
(74) Vertreter: Blum, Klaus-Dieter
(86) Internationale Anmeldenummer: EP9705017
(87) Internationale Veröffentlichungsnummer: WO9813242

(56) Entgegenhaltungen:
- EP-A- 0 488 833
- EP-A- 0 606 840
- EP-A- 0 696 533
- EP-A- 0 706 923
- WO-A-92/18363
- WO-A-93/08053
- WO-A-96/15926
- DE-A- 3 236 536
- DE-A- 4 438 721

## Beschreibung

Die Erfindung betrifft eine hydraulische Kraftfahrzeugbremsanlage mit Radschlupfregelung, insbesondere zur Fahrdynamikregelung, nach dem Oberbegriff des Patentanspruchs 1.

Aus der DE 41 30 729 A1 ist bereits eine hydraulische Kraftfahrzeugbremsanlage mit Radschlupfregelung bekannt geworden, die eine Pumpe und Druckmodulationsventile in der Bremsleitung zur Regelung des Radbremsdrucks aufweist. Auf den Pumpenkolben wirkt unmittelbar der Druck des Bremsdruckgebers, so daß auf die Abdichtung des Pumpkolbens der volle Druck des Bremsdruckgebers einwirkt. In bestimmten Anwendungsfällen, insbesondere für den Betrieb der Pumpe zum Zwecke einer Fahrdynamikregelung werden an die vorbeschriebene Abdichtung des Pumpkolbens besonders hohe Anforderungen gestellt, um in jedem Falle eine sichere Abdichtung des üblicherweise unter Atmosphärendruck stehenden Kurbelraums zu gewährleisten.

Für Kraftfahrzeugbremsanlagen, die mit einem Fahrdynamikregelsystem versehen sind, wird vorzugsweise ein aus der DE 32 36 536 A1 bekannter Pumpentyp verwendet, der sich durch eine zentrale Ansaugkanalführung im Pumpenkolben auszeichnet. Bei Verwendung eines solchen Pumpentyps werden deshalb recht hohe Anforderungen an die Abdichtung des Pumpenkolbens gegenüber dem Exzenterraum gestellt.

Aus der EP-A-706 923 ist eine hydraulische Kraftfahrzeugbremsanlage mit Radschlupfregelung bekannt, mit einer Pumpe, die mit ihrer Saugseite sowohl mit radbremsseitig angeordneten Druckmodulationsventilen als auch an einem hydraulischen Umschaltventil angeschlossen ist, das eine Drosselstelle aufweist, die zwischen einem Bremsdruckgeberanschluß und einem druckseitigen Pumpenanschluß des Umschaltventils gelegen ist. Die Drosselstelle bewirkt in einer Antriebsschlupfregelung einerseits eine Drosselung des von der Pumpe über das Umschaltventil aus dem Bremsdruckgeber angesaugten Druckmittels, andererseits erfolgt mittels der Drosselstelle ein Anstau von überschüssigem Fördervolumen der Pumpe in einer Kammer.

In der EP-A-696 533 wird ein hydraulisches Kraftfahrzeugbremssystem mit Radschlupfregelung beschrieben, das stromaufwärts zu den Radbremsen in den Bremsleitungen Druckmodulationsventile aufweist, denen zur Einstellung eines gewünschten Druckaufbau- und Druckabbaugradienten Festblenden vorgeordnet sind. Stromabwärts zu den Radbremsen sind Pumpen angeordnet, die überschüssiges Druckmittel der Radbremsen in die Bremsleitungen zurückfördern.

Es die Aufgabe der Erfindung, eine hydraulische Kraftfahrzeugbremsanlage der angegebenen Art dahingehend zu verbessern, daß mit möglichst geringem baulichen als auch funktionellen Aufwand ein Leckagestrom über den Pumpkolben in Richtung des Exzenterraumes verhindert wird.

Diese Aufgabe wird erfindungsgemäß durch die den Patentanspruch 1 kennzeichnenden Merkmale gelöst.

Weitere Merkmale und Vorteile der Erfindung gehen aus den Unteransprüchen hervor, die auf bauliche als auch schaltungstechnische Merkmale zur Blendengestaltung Bezug nehmen.

Im nachfolgenden soll anhand eines Ausführungsbeispieles das Wesen der Erfindung erläutert werden.

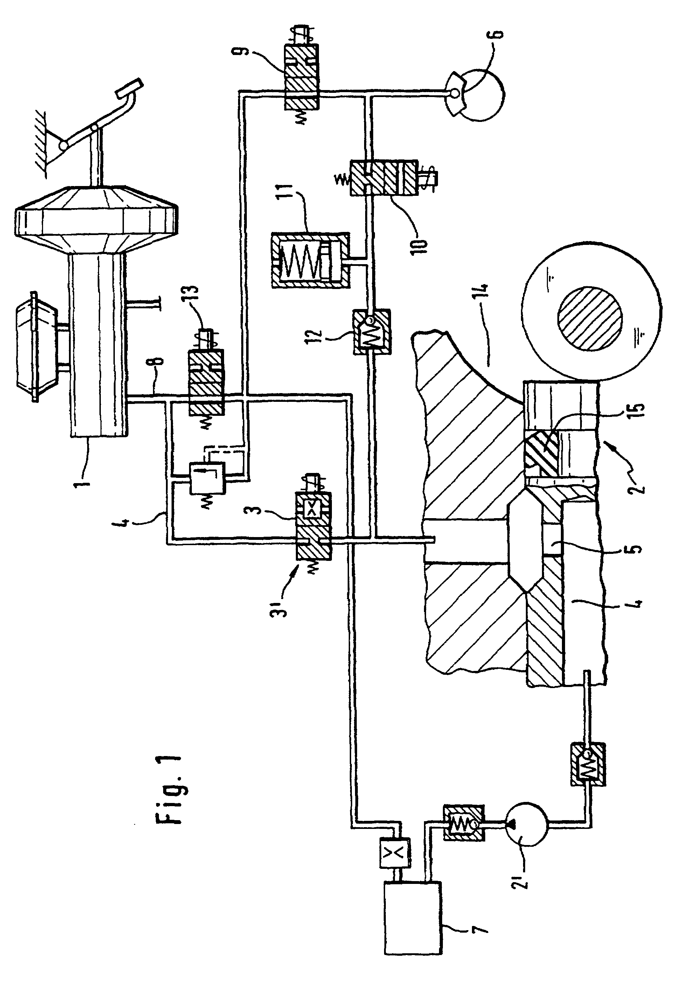

Die einzige Fig. 1 zeigt den prinzipiellen hydraulischen Schaltungsaufbau einer hydraulischen Kraftfahrzeugbremsanlage mit Radschupfregelung, die zur Fahrdynamikregelung geeignet ist in einer teilweisen Darstellung für einen Radbremskreis. Ferner zeigt die Abbildung eine Teilschnittdarstellung zur Konstruktion einer Pumpe 2, wie sie eingangs zum Stand der Technik nach DE 32 36 536 A1 erwähnt wurde. Die Pumpe 2 ist in der gewählten Darstellung in der Funktion einer Vorladepumpe wirksam, der sich eine Rückförderpumpe 2' anschließt, um das von der Radbremse 6 kommende Druckmittelvolumen über eine Dämpfungseinrichtung 7 wieder dem Bremskreis und damit der Bremsleitung 8 zuzuführen, die normalerweise den Bremsdruckgeber 1 mit der Radbremse 6 verbindet.

Zur Regelung des Radbremsdrucks werden an sich bereits bekannte Druckmodulationsventile 9,10 verwendet, die im vorliegenden Ausführungsbeispiel als elektromagnetisch betätigbares, in der Grundstellung geöffnetes 2/2-Wege-Einlaßventil und stromabwärts dazu als elektromagnetisch betätigbares, in der Grundstellung geschlossenes 2/2-Wege-Auslaßventil gestaltet sind.

Dem als Auslaßventil wirksamen Druckmodulationsventil 10 schließt sich ein Niederdruckspeicher 11 an, dem in Richtung der Saugseite der Pumpe 2 ein in der Regel mit einem Vordruck versehenes Rückschlagventil 12 folgt.

Über die bereits bekannten und hiermit nochmals erwähnten Merkmale der Bremsanlage, schließt sich nunmehr an dem von dem Druckmodulationsventil 10 kommenden Saugpfad der Pumpe 2 ein weiterer, als Bypassleitung 4 gekennzeichneter Saugpfad an, der ein Schaltblendenventil 3' aufweist, das in seiner Grundstellung die Verbindung zwischen dem Bremsdruckgeber 1 und dem Sauganschluß der Pumpe 2 unterbricht. Im vorliegenden Ausführungsbeispiel ist das Schaltblendenventil 3' als elektromagnetisch betätigbares 2/2-Wegeventil ausgeführt.

Zur Vereinfachung des Schaltungsaufbaus kann bei Wunsch oder Bedarf auf die elektromagnetische Betätigung in die Blendenstellung verzichtet werden, wenn die Blendenfunktion als Festblende in der Bypassleitung 4 ausgeführt wird.

Das von der Pumpe 2 abgewandte Ende der Bypassleitung 4 ist über die Bremsleitung 8 unabhängig von dem zu ihr stromabwärts angeordneten Trennventil 13 am Bremsdruckgeber 1 angeschlossen.

Erfindungsgemäß ist die Blende 3 in ihrem Querschnitt derart bemessen, daß der Mengendurchsatz in der Blende 3 auf ein Maß reduziert ist, das kleiner ist, als die Förderleistung der Pumpe 2. Durch diese Begrenzung des Mengenzuflusses zur Pumpe 2 bleibt die in Richtung des Exzenterraums 14 wirksame Dichtung 15 gering belastet, so daß diese Abdichtung relativ einfach gestaltet werden kann, sowie auch die bisher erforderlichen Fertigungs- als auch Verschleißtoleranzen geringeren Einfluß auf die Funktionsfähigkeit der Anlage haben.

Die Erfindung läßt sich nicht nur auf Bremssysteme mit einer Vorladepumpe anwenden, sondern gilt auch für Bremssysteme ohne Vorladung, bei denen eine selbstansaugende Pumpe 2 verwendet wird. Bei einem solchen System, das auf die Verwendung einer aus Fig. 1 dargestellten Vorladepumpe verzichtet, wird deshalb unter Beibehaltung des aus Fig. 1 bekannten schaltungstechnischen Grundaufbaus das vorgeschlagene Schaltblendenventil 3' durch ein 2/3-Wegeventil ersetzt, das zum ungehinderten Ansaugen aus dem Bremsdruckgeber 1 von der geschlossenen, ersten Schaltstellung in die zweite, ungedrosselt offene Schaltstellung elektromagnetisch betätigbar ist und bei einer mechanischen Betätigung des Bremsdruckgebers 1 sich in die dritte Schaltstellung elektromagnetisch bewegt, die die schaltbare Blende 3 aufweist. Damit wird gleichfalls wie zum vorangegangenen Ausführungsbeispiel nach Fig. 1 beim Betätigen der Arbeitskolben im Bremsdruckgeber 1 in der dritten Schaltstellung der Durchfluß vom Bremsdruckgeber 1 zur saugseite der Pumpe 2 auf einen kleineren Blendenquerschnitt reduziert.

Die Beaufschlagung der in Richtung des Exzenterraums 14 wirksamen Dichtung 15 ist somit als gering zu bezeichnen, solange die Pumpenleistung mengenmäßig über dem von der Radbremse 6 zur Pumpe 2 rückfließenden Förderstrom liegt.

Die Erfindung eignet sich überdies für Bremssysteme, bei denen während einer Antiblockierregelung zusätzlicher Hydraulikdruck in einem oder mehreren Radbremskreisen aufgebaut werden soll. Dies kann beispielhaft durch eine hydraulische Bremsassistentenfunktion oder durch eine aktive Druckerhöhung mittels eines hydraulischen Verstärkers geschehen. Hierzu wird in der Regel im Bremsdruckgeber 1 ein entsprechendes Druckniveau vorgegeben und sensiert. Bei Verwendung des zuvor beschriebenen Schaltblendenventils 3' kann bedarfsgerecht Hydraulikdruck in der gewünschten Radbremse 6 aufgebaut werden, wobei durch die entsprechende elektrische Ansteuerung des Blendenventils 3' in die Offenstellung ein bestimmtes Druckverhältnis zwischen dem Radbremsdruck und dem pedalbetätigten Hydraulikdruck des Bremsdruckgebers 1 während des Pumpenlaufs eingestellt werden kann. Auch bei einem derartigen Betrieb sorgt die auf die hydraulische Pumpenleistung abgestimmte Blende 3 für eine möglichst geringe Beanspruchung der Dichtung 15, da sich nur eine relativ kleine Druckdifferenz zwischen dem Hydraulikkreis und dem unter Atmosphärendruck stehenden Exzenterraum 14 einstellt. Sofern das Bremssystem am Bremsdruckgeber 1 mit einem Drucksensor versehen ist, verhindert die Blende 3 allzu große Druckschwankungen, womit sich eine zuverlässigere Funktion des Drucksensors ergibt.

### Bezugszeichenliste

- 1: Bremsdruckgeber
- 2: Pumpe
- 3: Blende
- 3': Schaltblendenventil
- 4: Bypassieitung
- 5: Ansaugkanal
- 6: Radbremse
- 7: Dämpfungseinrichtung
- 8: Bremsleitung
- 9,10: Druckmodulationsventile
- 11: Niederdruckspeicher
- 12: Rückschlagventil
- 13: Trennventil
- 14: Exzenterraum
- 15: Dichtung

## Patentansprüche

1. Hydraulische Kraftfahrzeugbremsanlage mit Radschlupfregelung, insbesondere zur Fahrdynamikregelung, mit wenigstens einer Pumpe (2), die als Kolbenpumpe ausgeführt ist, mit Druckmodulationsventilen (9, 10) in den Bremsleitungen (8) zur Regelung des Radbremsdrucks, wobei die Saugseite der Pumpe (2) sowohl direkt dem Druck eines Bremsdruckgebers (1), als auch über die in der Bremsdruckregelung betätigten Druckmodulationsventile (9, 10) dem geminderten Druck des Bremsdruckgebers (1) ausgesetzt ist, und wobei die Saugseite der Pumpe (2) in ihrem Saugpfad, der direkt dem hydraulischen Druck des Bremsdruckgebers (1) ausgesetzt ist, eine wirkungsmäßig ein- und ausschaltbare Blende (3) aufweist, **dadurch gekennzeichnet, daß** der Querschnitt der Blende (3) derart bemessen ist, daß der Mengendurchsatz in der Blende (3) auf ein Maß reduziert ist, das kleiner ist, als die Förderleistung der Pumpe (2).

2. Hydraulische Kraftfahrzeugbremsanlage nach Anspruch 1, **dadurch gekennzeichnet, daß** die Blende (3) Bestandteil eines vorzugsweise elektromagnetisch betätigbaren Schaltblendventils (3') ist.

3. Hydraulische Kraftfahrzeugbremsanlage nach Anspruch 1 oder 2, **dadurch gekennzeichnet, daß** die Funktion der Blende (3) zumindest im Betrieb der Pumpe (2) wirksam ist.

4. Hydraulische Kraftfahrzeugbremsanlage nach Anspruch 2, **dadurch gekennzeichnet, daß** das Schaltblendenventil (3') als vorzugsweise elektrisch betätigbares 2/2-Wegeventil ausgebildet ist, das in einer den Bremsdruckgeber (1) mit der Saugseite der Pumpe (2) verbindenden Bypassleitung (4) eingesetzt ist.

5. Hydraulische Kraftfahrzeugbremsanlage nach Anspruch 2, **dadurch gekennzeichnet, daß** das Schaltblendenventil (3') als vorzugsweise elektrisch betätigbares 2/3-Wegeventil ausgeführt ist, das in einer ersten Schaltstellung die Hydraulikverbindung des Bremsdruckgebers (1) mit der Pumpe (2) trennt, in der zweiten Schaltstellung einen ungehinderten Durchlaß herstellt und in der dritten Schaltstellung die Blendenstellung einnimmt.

6. Hydraulische Kraftfahrzeugbremsanlage nach Anspruch 5, **dadurch gekennzeichnet, daß** das Schaltblendenventil (3') anstatt der zweiten die dritte Schaltstellung einnimmt, wenn der Bremsdruckgeber (1) zum Aufbau eines Hydraulikdrucks mechanisch betätigt ist.

7. Hydraulische Kraftfahrzeugbremsanlage nach Anspruch 1, **dadurch gekennzeichnet, daß** die Pumpe (2) einen Ansaugkanal (5) aufweist, der vorzugsweise zwischen zwei Kolbenabdichtungen in einen Kolbenschaft der Pumpe (2) einmündet und in Richtung eines Pumpenraums durch den Kolbenschaft hindurchgeführt ist.

## Claims

1. Hydraulic automotive vehicle brake system with wheel slip control, in particular for driving dynamics control, including at least one pump (2) configured as a piston pump and pressure modulation valves (9, 10) in the brake lines (8) to control the wheel braking pressure, wherein the suction side of the pump (2) is exposed directly to the pressure of a braking pressure generator (1) as well as to the reduced pressure of the braking pressure generator (1) by way of the pressure modulation valves (9, 10) operated during braking pressure control, and wherein the suction side of the pump (2) has a diaphragm (3), which is adapted to be activated and deactivated in terms of effect, arranged in its suction conduit that is exposed directly to the hydraulic pressure of the braking pressure generator (1),
**characterized in that** the cross-section of the diaphragm (3) is dimensioned so that the rate of fluid flow in the diaphragm (3) is reduced to an extent smaller than the feed performance of the pump (2).

2. Hydraulic automotive vehicle brake system as claimed in claim 1,
**characterized in that** the diaphragm (3) is a part of a diaphragm valve (3') which is operable preferably electromagnetically.

3. Hydraulic automotive vehicle brake system as claimed in claim 1 or claim 2,
**characterized in that** the function of the diaphragm (3) is effective at least during operation of the pump (2).

4. Hydraulic automotive vehicle brake system as claimed in claim 2,
**characterized in that** the diaphragm valve (3') is configured as a two-way/two-position directional control valve which is operable preferably electrically and inserted into a bypass line (4) that connects the braking pressure generator (1) to the suction side of the pump (2).

5. Hydraulic automotive vehicle brake system as claimed in claim 2,
**characterized in that** the diaphragm valve (3') is configured as a two-way/three-position directional control valve which is operable preferably electrically and separates the hydraulic connection between the braking pressure generator (1) and the pmp (2) in a first switch position, provides an unimpeded passage in the second switch position, and adopts the diaphragm position in the third switch position.

6. Hydraulic automotive vehicle brake system as claimed in claim 5,
**characterized in that** the diaphragm valve (3') adopts the third switch position, instead of the second switch position, when the braking pressure generator (1) is mechanically actuated to build up hydraulic pressure.

7. Hydraulic automotive vehicle brake system as claimed in claim 1,
**characterized in that** the pump (2) includes a suction channel (5) which opens into a piston shaft of pump (2) preferably between two piston seals and extends through the piston shaft in the direction of a pump chamber.

## Revendications

1. Système de freinage hydraulique de véhicule automobile avec régulation du patinage, en particulier pour la régulation dynamique de marche, comportant au moins une pompe (2) qui est réalisée en tant que pompe à piston, des soupapes de modulation de pression (9, 10) dans les conduits de freinage (8) pour réguler la pression de freinage de roue, le côté aspiration de la pompe (2) étant soumis aussi bien directement à la pression d'un transducteur de pression de freinage (1) qu'à la pression réduite du transducteur de pression de freinage (1), par l'intermédiaire des soupapes de modulation de pression (9, 10) actionnées dans la régulation de pression de freinage, et le côté aspiration de la pompe (2) comportant, dans sa voie d'aspiration qui est directement soumise à la pression hydraulique du transducteur de pression de freinage (1), un diaphragme (3) dont l'action peut être activée et désactivée, **caractérisé en ce que** la section du diaphragme (3) a des dimensions telles que le débit dans le diaphragme (3) est réduit à une proposition inférieure à la capacité de refoulement de la pompe (2).

2. Système de freinage hydraulique de véhicule automobile selon la revendication 1, **caractérisé en ce que** le diaphragme (3) fait partie intégrante d'une soupape de commutation à diaphragme (3') qui peut être actionnée de préférence électromagnétiquement.

3. Système de freinage hydraulique de véhicule automobile selon la revendication 1 ou. 2, **caractérisé en ce que** la fonction du diaphragme (3) opère au moins pendant le fonctionnement de la pompe (2).

4. Système de freinage hydraulique de véhicule automobile selon la revendication 2, **caractérisé en ce que** la soupape de commutation à diaphragme (3') est réalisée en tant que soupape de distribution à 2/2 voies, de préférence actionnable électriquement, qui est insérée dans un conduit de dérivation (4) qui relie le transducteur de pression de freinage (1) au côté aspiration de la pompe (2).

5. Système de freinage hydraulique de véhicule automobile selon la revendication 2, **caractérisé en ce que** la soupape de commutation à diaphragme (3') est réalisée en tant que soupape de distribution à 2/3 voies, actionnable de préférence électriquement, qui, dans une première position de commutation, sépare la liaison hydraulique entre le transducteur de pression de freinage (1) et la pompe (2), dans la deuxième position de commutation, réalise un libre passage, et dans la troisième position de commutation, prend la position de diaphragme.

6. Système de freinage hydraulique de véhicule automobile selon la revendication 5, **caractérisé en ce que** la soupape de commutation à diaphragme (3') prend la troisième position de commutation au lieu de la deuxième, lorsque le transducteur de pression de freinage (1) est actionné mécaniquement avec la constitution d'une pression hydraulique.

7. Système de freinage hydraulique de véhicule automobile selon la revendication 1, **caractérisé en ce que** la pompe (2) comporte un canal d'aspiration (5) qui débouche de préférence entre deux étanchéités de piston, dans une tige de piston de la pompe (2), et est conduit à travers la tige de piston, en direction d'une chambre de pompe.
